Europäisches Patentamt

European Patent Office

Office européen des brevets

(19)

(11) Veröffentlichungsnummer: **0 288 693 B1**

## (12) EUROPÄISCHE PATENTSCHRIFT

(45) Veröffentlichungstag der Patentschrift: **19.05.93**

(51) Int. Cl.⁵: **G03G 9/08**

(21) Anmeldenummer: **88103393.0**

(22) Anmeldetag: **04.03.88**

(54) **Verfahren zur Herstellung von hochdispersem Metalloxid mit ammoniumfunktionellem Organopolysiloxan modifizierter Oberfläche als positiv steuerndes Ladungsmittel für Toner.**

(30) Priorität: **06.03.87 DE 3707226**

(43) Veröffentlichungstag der Anmeldung:
**02.11.88 Patentblatt 88/44**

(45) Bekanntmachung des Hinweises auf die
Patenterteilung:
**19.05.93 Patentblatt 93/20**

(84) Benannte Vertragsstaaten:
**DE FR GB NL**

(56) Entgegenhaltungen:
**DE-A- 3 330 380**

**PATENT ABSTRACTS OF JAPAN, Band 9, Nr. 68 (P-344)[1791], 28. March 1985; & JP-A-59 201 063 (CANON K.K.) 14-11-1984**

**PATENT ABSTRACTS OF JAPAN, Band 11, Nr. 137, (P-572) [2584], 2. Mai 1987; & JP-A-61 275 862 (KYOCERA CORP.) 05-12-1986**

(73) Patentinhaber: **WACKER-CHEMIE GMBH**
**Hanns-Seidel-Platz 4**
**W-8000 München 83(DE)**

(72) Erfinder: **Heinemann, Mario, Dr. Dipl.-Chem.**
**Leibnitzstrasse 23**
**W-8263 Burghausen(DE)**
Erfinder: **Bindl, Johann, Dr. Dipl.-Chem.**
**Regerstrasse 4**
**W-8263 Burghausen(DE)**
Erfinder: **Doppelberger, Johann, Dr.**
**Dipl.-Chem.**
**Buchenstrasse 3**
**W-8261 Emmerting(DE)**
Erfinder: **Scherm, Hans Peter, Dr.**
**Dipl.-Chem.**
**Oskar-Maria-Graf-Strasse 6**
**W-8960 Kempten(DE)**

EP 0 288 693 B1

**Beschreibung**

Hochdisperse Metalloxide mit elektrostatisch positiver Aufladbarkeit werden vor allem als Bestandteile von Entwicklern, häufig Toner genannt, für die Sichtbarmachung von negativen, elektrostatischen Ladungsbildern bei Verfahren wie z.B.: der Elektrophotographie und dem elektrostatischem Druck, bei denen eine positive Ladung eingestellt bzw. einreguliert wird, eingesetzt.

Aus der DE-OS-3330380 (Anmelder: Canon K.K., Tokyo, Anmeldetag: 23.8.83) ist ein mit ammoniumfunktionellem Silan, das eine endständige Vinylgruppe enthält, modifiziertes, pyrogen erzeugtes Siliciumdioxid als positiv steuerndes Ladungsmittel für Toner bekannt. Um weiterhin eine hinreichend hydrophobe Oberfläche zu erzielen, muß das Oxid gleichzeitig oder nachfolgend noch mit geeigneten Hydrophobiermitteln behandelt werden.

Aufgabe der Erfindung ist ein Verfahren zur Herstellung von hochdispersem Metalloxid mit hoher, stabiler, gleichmäßiger, positiver triboelektrischer Aufladbarkeit als Steuermittel für positiv ladbare Toner unter Vermeidung von technologisch aufwendigen Verfahrensschritten.

Gegenstand der Erfindung ist ein Verfahren zur Herstellung von hochdispersem Metalloxid mit durch ammoniumfunktionelles Organopolysiloxan modifizierter Oberfläche als positiv steuerndes Ladungsmittel für Toner, dadurch gekennzeichnet, daß hochdisperses Metalloxid mit Organopolysiloxan, das neben endständigen siliciumgebundenen Hydroxyl- und/oder Alkoxygruppen, Diorganosiloxaneinheiten, deren beide organischen Reste einwertige Kohlenwasserstoffreste sind, und Siloxaneinheiten mit über Kohlenstoff an Silicium gebundenen organischen Resten mit positiv geladenem Stickstoff enthält, umgesetzt wird.

Im Gegensatz zu den bisher bekannten Verfahren dieser Art, verleiht das erfindungsgemäße Verfahren den gemäß diesem Verfahren behandelten hochdispersen Metalloxiden bei Einsatz in Tonern nicht nur eine hohe, stabile, positive triboelektrische Aufladung sondern im selben Verfahrensschritt wird eine hohe hydrophobe Ausrichtung der Oberfläche des modifizierten jeweiligen hochdispersen Metalloxid erreicht.

Nach dem erfindungsgemäßen Verfahren können alle hochdispersen Metalloxide oberflächenmodifiziert werden, die auch bisher für den oben genannten Anwendungsbereich eingesetzt werden konnten. Bei den hochdispersen Metalloxiden kann es sich um pyrogen erzeugte oder um auf naßchemische Weise gewonnene Typen handeln. Vorzugsweise werden pyrogen erzeugte, hochdisperse Metalloxide eingesetzt. Erfindungsgemäß eingesetzte, hochdisperse Metalloxide sind vorzugsweise Siliciumdioxid, Aluminiumoxid, Titanoxid und Cooxide von wenigstens zwei Metallen aus der Gruppe Silicium, Aluminium und Titan, deren Oberflächen unbehandelt oder in an sich bekannter Weise mit in der Technik bekannten Hydrophobiermitteln behandelt sind. Insbesondere wird pyrogen erzeugtes, hochdisperses Siliciumoxid eingesetzt. Pyrogen hergestelltes Siliciumdioxid ist ein bekanntes Produkt (vgl. DE-PS 974793, DE-PS 974974, DE-OS 2620737). Es wird u.a. durch Flammenhydrolyse von Siliciumtetrachlorid hergestellt.

Verfahren zur Behandlung von hochdispersen Metalloxiden mit Hydrophobiermitteln sind beispielsweise in der DE-AS 1163784, DE-AS 2000396, DE-AS 2344388 oder DE-OS 2754484 beschrieben, hierbei werden die Hydroxylgruppen an der Oberfläche der Metalloxide mit hydrolisierbaren Gruppen von Organosiliciumverbindungen zur Reaktion gebracht.

Erfindungsgemäß eingesetzte Metalloxide sind vorzugsweise flammhydrolytisch erzeugte Metalloxide insbesondere Siliciumoxide mit folgenden physikalisch-chemischen Eigenschaften. Oberfläche gemäß BET mindestens 50 $m^2/g$, insbesondere 120 bis 500 $m^2/g$, Stampfdichte vorzugsweise 20 bis 450 g/l, insbesondere 40 bis 350 g/l, Primärteilchengröße vorzugsweise 5 bis 80 nm, insbesondere 5 bis 30 nm.

Die Alkoxygruppen im erfindungsgemäß eingesetzten Organopolysiloxan sind vorzugsweise Methoxy- oder Ethoxygruppen.

Die Diorganosiloxaneinheiten im Organopolysiloxan können durch die allgemeine Formel

$R_2SiO$

wiedergegeben werden, wobei R gleiche oder verschiedene einwertige Kohlenwasserstoffreste bedeutet. Vorzugsweise enthalten diese Kohlenwasserstoffreste 1 bis 20 Kohlenstoffatome je Rest. Beispiele sind Alkylreste, wie der Methyl-, Ethyl-, n-Propyl- und Isopropylrest sowie Butyl-, Octyl-, Tetradecyl-und Octadecylreste; Alkenylreste, wie der Vinyl- und Allylrest sowie Hexenylreste; cycloaliphatische Kohlenwasserstoffreste, wie der Cyclopentyl- und Cyclohexylrest; aromatische Kohlenwasserstoffreste, wie der Phenylrest sowie Naphthylreste; Alkarylreste, wie Tolylreste; Aralkylreste, wie der Benzylrest und Fluoralkylreste wie der Trifluorpropylrest und Perfluorhexylethylrest. Insbesondere wegen der leichteren Zugänglichkeit bestehen die Kohlenwasserstoffreste in den Diorganosiloxaneinheiten vorzugsweise aus Methylresten.

2

Siloxaneinheiten mit über Kohlenstoff an Silicium gebundenen organischen Resten mit positiv geladen – em Stickstoff sind vorzugsweise solche, die durch die allgemeine Formel

$$X^- [ (R^5 R_2^{2+} N R^1)_c (R^4)_a (R^3 O)_b SiO_{\underline{4-a-b-c}} ] \atop 2 \quad ,$$

wobei $R^1$ ein zweiwertiger Kohlenwasserstoffrest, $R^2$ Wasserstoff oder gleiche oder verschiedene Alkyl –, Aryl –, Arylalkylreste, $R^3$ gleiche oder verschiedene Alkylreste mit 1 bis 4 Kohlenwasserstoffatomen je Rest, $R^4$ ein einwertiger Kohlenwasserstoffrest, $R^5$ Wasserstoff, ein Alkylrest mit 1 bis 30 Kohlenstoffatomen oder ein Benzylrest, $X^\ominus$ ein Säureanion a 1,2 oder 3, b 1,2 oder 3 und c 1,2 oder 3 sein können, wiedergegeben werden können.

Bei einer bevorzugten Ausführungsform des erfindungsgemäßen Verfahrens enthält das erfindungsge – mäß eingesetzte Organopolysiloxan neben Siloxaneinheiten mit den oben beschriebenen über Kohlenstoff an Silicium positiv geladenem Stickstoff auch Siloxaneinheiten mit über Kohlenstoff an Silicium gebundenen organischen Resten mit basischem Stickstoff, die vorzugsweise der allgemeinen Formel

$$(R_2^6 \, N R^1)_c (R^4)_a (R^3 O)_b SiO_{\underline{4-a-b-c}} \atop 2 \quad ,$$

wobei $R^1$, $R^3$, $R^4$, a, b und c die oben dafür gegebene Bedeutung haben und $R^6$ Wasserstoff oder gleiche oder verschiedene Alkyl –, Aryl –, Arylalkyl –, Alkylaryl –, Aminoalkyl – oder Aminoarylreste sein kann, entsprechen.

Beispiele für zweiwertige Kohlenwasserstoffreste $R^1$ sind Akylenreste wie der Methylen – und Ethylen – rest sowie Propylen – Butylen –, Cyclohexylen –, Octadecylen –, Phenylen –, und Butylenreste. Insbeson – dere wegen der leichteren Zugänglichkeit ist der n – Propylenrest bevorzugt. Weitere Beispiele für $R^1$ sind Reste der Formeln $-(CH_2)_m CONH-(CH_2)_n-$ und $-(CH_2)_3 OCH_2 CH(OH)CH_2-$, wobei m vorzugsweise innerhalb des Bereiches 2 – 10 und n vorzugsweise innerhalb des Bereiches 2 – 4 liegt.

Die Beispiele für Alkylreste R gelten im vollen Umfang auch für Alkylreste $R^6$ und $R^4$.

Beispiele für Ammoniumalkylreste, die dem Rest $(R^5 R_2^2 N^+ R^1)X^-$ entsprechen, sind solche der Formeln

$Cl^\ominus (C_2H_5)_3 \overset{\oplus}{N} - (CH_2)_3 -$

$Cl^\ominus (CH_3)_3 \overset{\oplus}{N} - (CH_2)_3 -$

$J^\ominus (CH_3)_3 \overset{\oplus}{N} - (CH_2)_3 -$

$J^\ominus (C_2H_5)_3 \overset{\oplus}{N} - (CH_2)_3 -$

$Cl^\ominus (CH_3)_2 (CH_2 C_6 H_5) \overset{\oplus}{N} - (CH_2)_3 -$

$Cl^\ominus (n-C_4H_9)_3 \overset{\oplus}{N} - (CH_2)_3 -$

$Cl^\ominus (C_{12}H_{25}) (CH_3)_2 \overset{\oplus}{N} - (CH_2)_3 -$

$Cl^\ominus (C_{17}H_{35}) (CH_3)_2 \overset{\oplus}{N} - (CH_2)_3 -$

$Cl^\ominus (C_{18}H_{37}) (CH_3)_2 \overset{\oplus}{N} - (CH_2)_3 -$

$Cl^\ominus \overset{\oplus}{H_3 N} (CH_2)_2 \overset{\oplus}{NH_2} (CH_2)_3 - Cl^\ominus$

$Cl^\ominus C_4 H_9 \overset{\oplus}{NH_2} CH_2 CH_2 \overset{\oplus}{NH_2} CH_2 CH_2 - Cl^\ominus$

3

Beispiele für Aminoalkylreste, die dem Rest $(R_2^6 N - R^1)$ entsprechen sind solche der Formeln

$$H_2N \ (CH_2)_3 \ -$$

$$H_2N \ (CH_2)_2 NH(CH_2)_3 \ -$$

$$H_2N \ (CH_2)_2 \ -$$

$$(H_3C)_2 \ N \ (CH_2)_2 \ -$$

$$H_2N \ (CH_2)_5 \ -$$

$$C_4H_9 \ NH \ CH_2 \ CH_2 \ NH \ CH_2CH_2 \ -$$

$$\begin{matrix} H_5C_2 \\ \phantom{} \\ H_5C_2 \end{matrix} N - (CH_2)_3 \ -$$

$$H_2N- \bigcirc - $$

$$\bigcirc - NH - (CH_2)_3 \ -$$

Vorzugsweise besitzen die erfindungsgemäß verwendeten Organopolysiloxane eine kinematische Viskosität von 5 bis 5000 $mm^2/s$ bei 25°C. Insbesondere von 10 bis 1000 $mm^2/s$ bei 25°C. Das Verhältnis der Siloxaneinheiten mit den oben dafür gegebenen Formeln zu Diorganosiloxaneinheiten der allgemeinen Formel $R_2SiO$ ist vorzugsweise 1 : 100 bis 1 : 1, insbesondere 1 : 30 bis 1 : 2.

Die Herstellung der erfindungsgemäß verwendeten Organopolysiloxane erfolgt in an sich bekannter Weise (vgl. W. Noll, Chemistry and Technology of Silicones, Academic Press Inc., Orlando 1968), beispielsweise durch Umsetzung von Verbindungen der allgemeinen Formeln $HO - [SiR_2O]_nH$ und/oder $[SiR_2O]_n$ mit $[(R^3O)_3Si - R^1N^+R_2^2 \ R^5]X^-$ und gegebenenfalls $(R^3O)_3SiR^1NR^6{}_2$ wobei R, $R^1$, $R^2$, $R^3$, $R^4$, $R^5$, $R^6$, und $X^-$ die oben dafür gegebene Bedeutung haben und n vorzugsweise innerhalb der Grenzen 1 bis 1000, insbesondere 1 bis 300, liegt.

Die Herstellung der Organosilylammoniumverbindungen erfolgt in an sich bekannter Weise (vgl. DE-AS 2229580) u.a. durch Umsetzung von Alkoxysilylalkylhalogeniden mit Aminen wie u.a. mit tertiären Aminen.

Ein weiteres Verfahren zur Herstellung der ammoniumfunktionellen Reste im Organopolysiloxan besteht in der Protonierung der Aminoalkylgruppen mit Säuren. Beispiele für Säuren sind Halogenwasserstoffsäuren und andere anorganische oder organische Säuren.

Beim erfindungsgemäßen Verfahren wird vorzugsweise 1 bis 50 Gew.-%, insbesondere 5 bis 30 Gew.-%, Organopolysiloxan, bezogen auf eingesetztes hochdisperses Metalloxid, verwendet.

Das Organopolysiloxan wird vorzugsweise in alkoholischer Lösung eingesetzt, wobei vorzugsweise Alkohole mit 1 bis 5 Kohlenstoffatomen, insbesondere Methanol, Ethanol, Isopropanol oder deren Mischungen verwendet werden. Der Gehalt der Lösung an Organopolysiloxan ist in Abhängigkeit von der Löslichkeit und den Eigenschaften der entstehenden Reaktionsprodukte vorzugsweise 1 bis 90 Gew.-%, insbesondere 10 bis 50 Gew.-%.

Die erfindungsgemäß eingesetzten hochdispersen Metalloxide werden vorzugsweise in fester Phase, also ohne die Gegenwart eines Lösungsmittels verwendet. Sie können jedoch auch in organischen Lösungsmitteln dispergiert werden.

Gemäß einer bevorzugten Ausführungsform des erfindungsgemäßen Verfahrens können auch basische Verbindungen für die Aktivierung der erfindungsgemäß eingesetzten hochdispersen Metalloxide, insbesondere für hochdisperses Siliciumdioxid, eingesetzt werden. Insbesondere wird Ammoniak eingesetzt. Vorzugsweise in Mengen von 1 bis 10 Gew.-% bezogen auf das hochdisperse Metalloxid.

Die Vernetzung des auf geeignete Weise auf das hochdisperse Metalloxid applizierten Organopolysiloxans erfolgt bei Temperaturen im Bereich von vorzugsweise 20 bis 250°C, insbesondere 80 bis 220°C.

Für die Reaktion kann jedes geeignete Mischgefäß verwendet werden, beispielsweise pneumatische Mischer, Mischer mit rotierenden Mischwerkzeugen, die durch rotierende Schaufeln, Messer oder Stifte für eine lebhafte Stoffbewegung sorgen. Besonders geeignet sind Pflugscharmischer, Henschelmischer, Kollergänge und Kugelmühlen. Die Zugabe der alkoholischen Lösung des Organopolysiloxans auf das in den genannten Geräten vorgelegte Metalloxid kann auf jede geeignete Weise erfolgen. Vorzugsweise über Zerstäuber oder in einfachen Fällen durch Eintropfen.

Nach dem Homogenisieren wird das erhaltene fließfähige Pulver in Abhängigkeit von der Temperatur wenige Minuten bis mehrere Stunden, vorzugsweise 0,5 bis 6 Stunden bei einer Temperatur von vorzugsweise 80 bis 250°C gehalten. Hierfür kann jede geeignete Vorrichtung, beispielsweise ein Umlufttrockenschrank, ein Heizmischer oder insbesondere ein Tellertrockner verwendet werden.

4

Durch geeignete Auswahl der erfindungsgemäß eingesetzten hochdispersen Metalloxide und Organo – polysiloxane können die triboelektrische Aufladbarkeit, die Hydrophobie und damit die Fließ – und Riesel – eigenschaften der durch das erfindungsgemäße Verfahren erhaltenen hochdispersen Metalloxide auf ge – wünschte Werte eingestellt bzw. einreguliert werden.

Die durch das erfindungsgemäße Verfahren erhaltenen hochdispersen Metalloxide mit Organopolysilo – xan modifizierter Oberfläche wirken als positiv steuernde Ladungsmittel in Tonern. Die positive triboelektri – sche Aufladbarkeit wurde nach der Ausblasmethode (beschrieben in Japan Soc. of Color Materials Seite 630, 1982) gemessen.

Für die Messung der triboelektrischen Ladungsmenge, somit die Bestimmung des Ladungs/Masseverhältnisses (Q/m), bestand der "Modell – Toner" aus Gründen der Übersichtlichkeit in der Regel nur aus dem System Trägerteilchen/hochdisperses Metalloxid. Bezogen auf das Trägerteilchen, in der Regel ein sphäroides nicht beschichtetes Eisenoxidpulver (Teilchengröße 50 bis 85 $\mu$m), betrug die Einwaage an hochdispersem Metalloxid 1 %. Vor der Q/m – Messung wurde das System Träger/Kieselsäure auf einem Rollenbock in einer PE – Flasche aktiviert. Die Ladungswerte variierten bei vorgegebenem Trägerteilchen zwischen + 10 $\mu$C/g und + 300 $\mu$C/g, in Abhängigkeit des zur Oberflächenmodifizierung der hochdispersen Metalloxide eingesetzten Organopolysiloxans.

Analog dem Zweikomponenten – Entwicklungssystem, bei dem die triboelektrische Aufladungswirkung auf die hochdispersen Metalloxide durch die Trägerteilchen hervorgerufen wird, können die o.g. hochdis – persen Metalloxide mit ammoniumfunktioneller Organopolysiloxan modifizierter Oberfläche auch in Einkomponentensystem – Entwicklungsverfahren sehr geeignete Ladungssteuerstoffe für positiv aufladbare Toner sein.

Das als Ladungsregulier – Fließmittel verwandte, in der oben beschriebenen Weise modifizierte, hoch – disperse Metalloxid, muß ein hinreichend hydrophobes Verhalten aufweisen, um als Ladungssteuerstoff zum Aufprägen einer positiven elektrostatischen Aufladung wirksam zu sein. Zur Bewertung der Hydrophobie dient das Benetzungsverhalten gegenüber Methanol, ausgedrückt in Methanolzahlen. Die Methanoltitration wird folgendermaßen durchgeführt:

Zu 50 ml dest. Wasser, vorgelegt in einem Becherglas mit einem Fassungsvermögen von 250 ml, wird 0,2 g zu testendes Produkt eingewogen. Aus einer Bürette, deren Spitze in die Flüssigkeit eintaucht, wird Methanol zugetropft, bis die gesamte Menge des oberflächenmodifizierten, hochdispersen Metalloxids benetzt ist. Dabei wird ständig mit einem Magnetrührer langsam gerührt. Aus der Menge an Methanol, ausgedrückt in a ml, die zur vollständigen Benetzung benötigt wird, errechnet sich der Hydrophobiergrad (Methanolzahl) nach:

$$\text{Methanolzahl} = \frac{a}{50 + a} \times 100$$

Die Erfindung wird nun anhand von Beispielen näher erläutert.

Beispiel 1

80 Gewichtsteile einer auf pyrogenem Wege hergestellten hochdispersen Kieselsäure, die eine spezifi – sche Oberfläche von 170 m$^2$/g nach BET, eine Stampfdichte von 90 g/l besitzt und deren Oberfläche chemisch gebundene Dimethylsiloxygruppen trägt, wird in einem Kollergang mit 5 Gewichtsteilen einer 25 – %igen wäßrigen Ammoniaklösung bei 25°C aktiviert. Unter Aufmahlen werden 20 Gewichtsteile einer 40 – %igen Methanol/i – Propanol Mischung eines Umsetzungsproduktes aus in den endständigen Einheiten je eine Si – gebundene Hydroxygruppe aufweisendem Dimethylpolysiloxan mit einer Viskosität von 100 mPa.s bei 25°C und dem Silan der Formel

H$_2$N(CH$_2$)$_2$NH(CH$_2$)$_3$Si(OCH$_3$)$_3$

mit 0,3 Gewichtsteilen 37 – %iger HCl, bei 35°C mit der Kieselsäure zur Reaktion gebracht, wobei das Umsetzungsprodukt eine Aminzahl (= Anzahl der ml 1 – n – HCl, die zum Neutralisieren von 1 g Substanz erforderlich sind) von 2,9 und eine Viskosität von 51 mPa.s bei 25°C aufweist. Nach 6 – stündigem Homogenisieren wird das Reaktionsprodukt durch Fördern in einen Tellertrockner unter Inertbedingungen bei 130°C von den Lösemitteln befreit. Die Prüfung ergab ein vollständig hydrophobes, freifließendes Pulver.

| | |
|---|---|
| Spezifische Oberfläche nach BET | : | 108 m$^2$/g |
| Hydrophobiergrad in Methanolzahlen | : | 64 |
| Kohlenstoffgehalt | : | 6,4 % |
| Stampfdichte nach DIN 53194 | : | 167 g/l |
| Triboelektrische Aufladung * | : | + 188 µC/g |

(* Meßbedingungen: 100 g Eisenoxidträgerteilchen Type X-28 Dowa Mining Japan; 1 g Produkt; Aktivierungsdauer 30 min; Sieb 50 µm; Stickstoffmenge 1l/min. Meßgerät: TB-200, Toshiba Chemical, Tokyo, Japan)

## Beispiel 2

Beispiel 1 wurde wiederholt mit der Abänderung, daß eine hochdisperse Kieselsäure, die an der Oberfläche chemisch gebundene Dimethylsiloxyeinheiten trägt, mit einer spezifischen Oberfläche von 200 m$^2$/g nach BET und einer Stampfdichte von 90 g/l verwendet wurde. Das Polysiloxan wies dabei eine Aminzahl von 3,3 auf. Die Prüfung ergab ein vollständig hydrophobes, freifließendes Pulver.

| | |
|---|---|
| Spezifische Oberfläche nach BET | 118 m$^2$/g |
| Hydrophobiergrad in Methanolzahlen | 65 |
| Kohlenstoffgehalt | 6,6 % |
| Stampfdichte nach DIN 53194 | 186 g/l |
| Triboelektrische Aufladung * | + 239 µC/g |
| (* Meßbedingungen und Gerät vgl. Beispiel 1) | |

## Beispiel 3

Beispiel 1 wurde wiederholt mit der Abänderung, daß eine hochdisperse Kieselsäure, die an der Oberfläche chemisch gebundenem Dimethylsiloxyeinheiten trägt, mit einer spezifischen Oberfläche von 120 m$^2$/g nach BET und einer Stampfdichte von 90 g/l verwendet wurde.

Die Prüfung ergab ein vollständig hydrophobes, freifließendes Pulver.

| | |
|---|---|
| Spezifische Oberfläche nach BET | 95 m$^2$/g |
| Hydrophobiergrad in Methanolzahlen | 64 |
| Kohlenstoffgehalt | 4,3 Gew. – % |
| Stampfdichte nach DIN 53194 | 230 g/l |
| Triboelektrische Aufladung | + 180 µC/g |
| (Meßbedingungen vgl. Beispiel 1) | |

Beispiel 4

In einem Intensiv – Pulvermischer werden 80 Teile einer auf pyrogenem Wege hergestellten hochdis – persen Kieselsäure, die eine spezifische Oberfläche von 200 m$^2$/g nach BET aufweist, eine Stampfdichte nach DIN 53194 von 40 g/l hat und deren Oberfläche chemisch gebundene Dimethylsiloxygruppen trägt, mit 5 Teilen einer 25 – %igen wäßrigen Ammoniaklösung bei 25˚C aktiviert und mit 20 Teilen einer 40 – %igen Methanol – i – Propanol – Mischung eines Umsetzungsproduktes aus in den endständigen Einheiten je eine Si – gebundene Hydroxylgruppe aufweisendem Dimethylpolysiloxan mit einer Viskosität von 100 mPa.s bei 25˚C und dem Silan der Formel

$(CH_3O)_3Si(CH_2)_3NH(CH_2)_2NH_2$

mit 0,3 Teilen 37 – %iger wäßriger HCl, bei 35˚C zur Reaktion gebracht wird, wobei das Umsetzungspro – dukt eine Aminzahl von 2 und eine Viskosität von 60 mPa.s bei 25˚C hat. Die alkoholische Lösung des o.g. Umsetzungsproduktes wird dabei auf die Kieselsäure aufgesprüht. Nach 20 min Homogenisieren wird das Reaktionsprodukt durch Fördern in einem Durchlüftungstrockner unter Inertbedingungen bei 130˚C von den Lösemitteln befreit.

Die Prüfung ergab ein vollständig hydrophobes freifließendes Pulver

| | |
|---|---|
| Spezifische Oberfläche nach BET | 115 m$^2$/g |
| Hydrophobiergrad in Methanolzahlen | 63 |
| Kohlenstoffgehalt | 4,4 Gew. – % |
| Stampfdichte nach DIN 53194 | 64 g/l |
| Triboelektrische Aufladung * | + 140 µC/g |

(* Meßbedingungen: 50 g Eisenoxidträgerteilchen Type A Tomoegawa, Japan; 0,5 g Produkt; Aktivierungsdauer 10 min; Sieb 50 µm; Luftmenge 1l/min. Meßgerät: Q/m – Meter Typ 04, Dr. R.H. Epping, München, BRD)

Beispiel 5

Beispiel 4 wurde wiederholt mit der Abänderung, daß ein Umsetzungsprodukt aus obigen Komponenten mit einer Aminzahl von 3,3 und einer Viskosität von 37 mPa.s eingesetzt wurde.
Die Prüfung ergab ein vollständig hydrophobes, freifließendes Pulver.

| | |
|---|---|
| Spezifische Oberfläche nach BET | 110 m$^2$/g |
| Hydrophobiergrad in Methanolzahlen | 68 |
| Kohlenstoffgehalt | 5,9 Gew. – % |
| Stampfdichte nach DIN 53194 | 68 g/l |
| Triboelektrische Aufladung | + 270 µC/g |
| (Meßbedingungen und – gerät vgl. Beispiel 4) | |

Beispiel 6

Gemäß Beispiel 4 wurden 80 Teile hochdisperses Siliciumdioxid mit 20 Teilen einer 40 – %igen Methanol/i – Propanol – Mischung eines Umsetzungsproduktes aus Dimethylpolysiloxan und einem Silan der Formel

$(CH_3O)_3Si(CH_2)_3N^+(CH_2)_2(CH_{18}H_{37})Cl^-$

wobei die Diorganosiloxaneinheiten zu den Siloxaneinheiten mit über Kohlenstoff an Silicium gebundenen, organischen Rest mit positiv geladenem Stickstoff im Verhältnis 8 : 1 stehen, zur Reaktion gebracht.
Die Prüfung ergab ein vollständig hydrophobes, freifließendes Pulver.

| Spezifische Oberfläche nach BET | 117 m²/g |
| Hydrophobiergrad in Methanolzahlen | 61 |
| Kohlenstoffgehalt | 7,2 Gew. − % |
| Stampfdichte nach DIN 53194 | 59 g/l |
| Triboelektrische Aufladung | + 76 μC/g |
| (Meßbedingungen und − gerät vgl. Beispiel 4) | |

Beispiel 7

Beispiel 4 wurde wiederholt mit der Abänderung, 20 Teile einer 40 − %igen Methanol/i − Propanol − Mischung eines Umsetzungsproduktes aus Methylphenylpolysiloxan mit einer Viskosität von 1000 mPa.s bei 25˚C und einem Silan der Formel

$(CH_3O)_3Si(CH_2)_3NH(CH_2)_3NH_2$

wobei dieses Umsetzungsprodukt eine Aminzahl von 3,1 und eine Viskosität von 400 mPa.s bei 25˚C hat, mit 0,3 Gew. − Teilen 37 − %iger HCl bei 35˚C zur Reaktion zu bringen.

Die Prüfung ergab ein vollständig hydrophobes, freifließendes Pulver.

| Spezifische Oberfläche nach BET | 134 m²/g |
| Hydrophobiergrad in Methanolzahlen | 57 |
| Kohlenstoffgehalt | 8,5 Gew. − % |
| Stampfdichte nach DIN 53194 | 54 g/l |
| Triboelektrische Aufladung | + 10 μC/g |
| (Meßbedingungen und − gerät vgl. Beispiel 4) | |

Beispiel 8

Die gleiche Verfahrensweise wie in Beispiel 4 wurde im wesentlichen wiederholt, wobei jedoch anstelle der hochdispersen Kieselsäure hochdisperses Aluminiumoxid (Type Alox C, Degussa, Rheinfelden, BRD) eingesetzt wurde.

| Spezifische Oberfläche nach BET | 91 m²/g |
| Hydrophobiergrad in Methanolzahlen | 66 |
| Kohlenstoffgehalt | 4,4 % |
| Stampfdichte nach DIN 53194 | 128 g/l |
| Triboelektrische Aufladung | + 93 μC/g |
| (Meßbedingungen und − gerät vgl. Beispiel 4) | |

**Patentansprüche**

1. Verfahren zur Herstellung von hochdispersem Metalloxid mit durch ammoniumfunktionelles Organopo − lysiloxan modifizierter Oberfläche als positiv steuerndes Ladungsmittel für Toner, dadurch gekenn − zeichnet, daß hochdisperses Metalloxid mit Organopolysiloxan, das neben endständigen siliciumge − bundenen Hydroxyl − und/oder Alkoxygruppen, Diorganosiloxaneinheiten, deren beide organischen Reste einwertige Kohlenwasserstoffreste sind, und Siloxaneinheiten mit über Kohlenstoff an Silicium gebundenen organischen Resten mit positiv geladenem Stickstoff enthält, umgesetzt wird.

2. Verfahren nach Anspruch 1, dadurch gekennzeichnet, daß Organopolysiloxan mit Siloxaneinheiten, die über Kohlenstoff an Silicium gebundene organische Reste mit positiv geladenem Stickstoff und basischem Stickstoff enthalten, eingesetzt wird.

**3.** Verfahren nach Anspruch 1 oder 2, dadurch gekennzeichnet, daß hochdisperses pyrogen erzeugtes Metalloxid eingesetzt wird.

**4.** Verfahren nach einem der Ansprüche 1 bis 3, dadurch gekennzeichnet, daß hochdisperses Silicium‐dioxid, hochdisperses Aluminiumoxid, hochdisperses Titanoxid oder ein hochdisperses Cooxid von wenigstens zwei Metallen aus der Gruppe Silicium, Aluminium und Titan eingesetzt wird.

**5.** Verfahren nach einem der Ansprüche 1 bis 3, dadurch gekennzeichnet, daß mit Hydrophobiermittel behandeltes hochdisperses Siliciumdioxid eingesetzt wird.

**6.** Verfahren nach einem der Ansprüche 1 bis 3, dadurch gekennzeichnet, daß hochdisperses pyrogen erzeugtes Siliciumdioxid eingesetzt wird.

**7.** Verfahren nach einem der Ansprüche 1 bis 6, dadurch gekennzeichnet, daß 1 bis 50 Gew.‐% Organopolysiloxan,bezogen auf eingesetztes hochdisperses Metalloxid, verwendet wird.

## Claims

**1.** Process for the preparation of highly disperse metal oxide with a surface modified by ammonium‐functional organopolysiloxane as positively controlling charging agent for toners, characterised in that highly disperse metal oxide is reacted with organopolysiloxane which, in addition to terminal silicon‐bonded hydroxyl and/or alkoxy groups, contains diorganopolysiloxane units whose two organic radicals are monovalent hydrocarbon radicals, and siloxane units with organic radicals containing positively charged nitrogen and bonded to silicon via carbon.

**2.** Process according to Claim 1, characterised in that organopolysiloxane with siloxane units which contain organic radicals containing positively charged nitrogen and basic nitrogen and bonded to silicon via carbon is used.

**3.** Process according to Claim 1 or 2, characterised in that highly disperse pyrogenically produced metal oxide is used.

**4.** Process according one of Claims 1 to 3, characterised in that highly disperse silicon dioxide, highly disperse aluminium oxide, highly disperse titanium oxide or a highly disperse combined oxide of at least two metals from the group comprising silicon, aluminium and titanium is used.

**5.** Process according to one of Claims 1 to 3, characterised in that highly disperse silicon dioxide treated with hydrophobising agent is used.

**6.** Process according to one of Claims 1 to 3, characterised in that highly disperse, pyrogenically produced silicon oxide is used.

**7.** Process according to one of Claims 1 to 6, characterised in that 1 to 50% by weight of or‐ganopolysiloxane, referred to the highly disperse metal oxide employed, is used.

## Revendications

**1.** Procédé pour préparer un oxyde métallique hautement dispersé, ayant une surface modifiée par un polyorganosiloxane à fonctionnalité ammonium, servant de régulateur de charge positive pour toners, caractérisé en ce qu'on fait réagir un oxyde métallique hautement dispersé avec un polyorganosiloxane qui,outre des groupes hydroxyle et/ou alcoxy terminaux liés au silicium, contient des motifs diorgano‐siloxane,dont les deux radicaux organiques sont hydrocarbonés monovalents, et des motifs siloxane comportant des résidus organiques, liés au silicium par l'intermédiaire d'un carbone et comportant un azote positivement chargé.

**2.** Procédé selon la revendication 1, caractérisé en ce qu'on utilise un polyorganosiloxane comportant des motifs siloxane qui contiennent des radicaux organiques, liés au silicium par l'intermédiaire d'un carbone, comportant un azote positivement chargé et un azote basique.

**3.** Procédé selon la revendication 1 ou 2, caractérisé en ce qu'on utilise un oxyde métallique hautement dispersé obtenu par voie pyrogène.

**4.** Procédé selon l'une des revendications 1 à 3, caractérisé en ce qu'on utilise une silice hautement dispersée, un oxyde d'aluminium hautement dispersé, un oxyde de titane hautement dispersé ou un cooxyde hautement dispersé d'au moins deux métaux du groupe comprenant le silicium, l'aluminium et le titane.

**5.** Procédé selon l'une des revendications 1 à 3, caractérisé en ce qu'on utilise une silice hautement dispersée traitée par des agents d'hydrophobisation.

**6.** Procédé selon l'une des revendications 1 à 3, caractérisé en ce qu'on utilise une silice hautement dispersée obtenue par voie pyrogène.

**7.** Procédé selon l'une des revendications 1 à 6, caractérisé en ce qu'on utilise de 1 à 50 % en poids d'un polyorganosiloxane par rapport à l'oxyde métallique hautement dispersé utilisé.